(19) Europäisches Patentamt
European Patent Office
Office européen des brevets

(11) **EP 4 471 922 A1**

(12) **EUROPEAN PATENT APPLICATION**
published in accordance with Art. 153(4) EPC


(43) Date of publication:
**04.12.2024 Bulletin 2024/49**

(21) Application number: **22922765.7**

(22) Date of filing: **28.01.2022**

(51) International Patent Classification (IPC):
***H01M 10/052*** *(2010.01)* ***H01M 10/0569*** *(2010.01)*
***H01M 10/0568*** *(2010.01)*

(52) Cooperative Patent Classification (CPC):
**H01M 10/052; H01M 4/382; H01M 10/0567; H01M 10/0568; H01M 10/0569;** H01M 4/131; H01M 2004/021; H01M 2004/028; H01M 2300/0028; H01M 2300/0037; Y02E 60/10

(86) International application number:
**PCT/CN2022/074525**

(87) International publication number:
**WO 2023/141920 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Ningde Amperex Technology Limited**
**Ningde, Fujian 352100 (CN)**

(72) Inventors:
- **LI, Wenwen**
  **Ningde, Fujian 352100 (CN)**
- **LI, Daguang**
  **Ningde, Fujian 352100 (CN)**
- **GUAN, Wenhao**
  **Ningde, Fujian 352100 (CN)**
- **CHEN, Maohua**
  **Ningde, Fujian 352100 (CN)**

(74) Representative: **Klunker IP**
**Patentanwälte PartG mbB**
**Destouchesstraße 68**
**80796 München (DE)**


(54) **LITHIUM METAL BATTERY AND ELECTRONIC DEVICE**


(57) A lithium metal battery and an electronic apparatus are provided. The lithium metal battery includes a positive electrode plate, a negative electrode plate, and an electrolyte. The electrolyte includes a lithium salt and a solvent. A molar concentration of the lithium salt is A mol/L, where $2 \leq A \leq 4$. The solvent includes a first solvent. Based on a total mass of the solvent in the electrolyte, a mass percentage of the first solvent is B%, satisfying $10 \leq B \leq 50$. The lithium metal battery satisfies a relation: $40 \leq A \times B \leq 100$. In the lithium metal battery and the electronic apparatus provided in this application, cycling performance and safety performance of the lithium metal battery are improved through the adjustment of components of a fluorine-containing solvent in the electrolyte and components and structure of an SEI film at a negative electrode side.


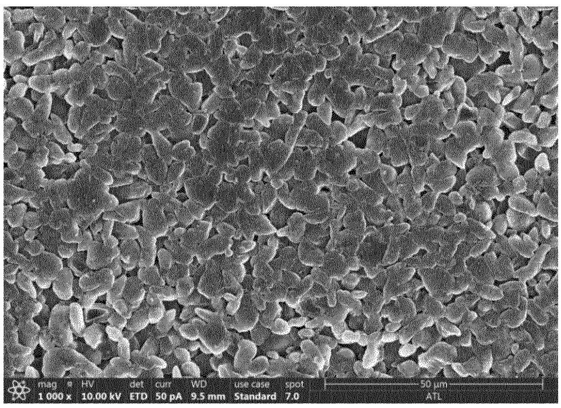


FIG. 1

EP 4 471 922 A1

## Description

### TECHNICAL FIELD

This application relates to the battery field, and in particular, to a lithium metal battery and an electronic apparatus.

### BACKGROUND

With the popularity of consumer electronic products such as notebook computers, mobile phones, handheld game consoles, tablet computers, mobile power supplies, and unmanned aerial vehicles, increasingly stringent requirements are raised for batteries in these products. For instance, not only are batteries to be lightweight but they are also required to have high capacity, long service life, and the ability for rapid charging and discharging.

Lithium metal batteries have become mainstream in the market due to their prominent advantages such as high energy density, high safety, low self-discharge, no memory effect, and long service life. Currently, how the cycling performance of lithium metal batteries is further improved has become a focus of research and development in the field of lithium metal batteries.

At present, most of common approaches to improve the cycling performance of lithium metal batteries is to add a film-forming additives to promote the formation of a stable solid electrolyte interface. However, the consumption of these additives accelerates the deterioration of battery performance in the later stages of cycling. In view of this, there is a clear need to provide a non-aqueous electrolyte and lithium metal battery with improved cycling performance.

### SUMMARY

The purpose of the application is to provide a lithium metal battery and an electronic apparatus to improve the cycling performance of the lithium metal battery.

A first aspect of this application provides a lithium metal battery, including a positive electrode plate, a negative electrode plate, and an electrolyte, where the electrolyte includes a lithium salt and a solvent, a molar concentration of the lithium salt is A mol/L, and $2 \leq A \leq 4$, for example, A may be 2, 2.5, 3, 3.5, 4, or in a range defined by any two of these values; and the solvent includes a first solvent, and based on a total mass of the solvent in the electrolyte, a mass percentage of the first solvent is B%, satisfying $10 \leq B \leq 50$, for example, B may be 10, 15, 20, 25, 30, 35, 40, 45, 50, or in a range defined by any two of these values; where A and B satisfy a relation: $40 \leq A \times B \leq 100$, for example, $A \times B$ may be 40, 45, 50, 55, 60, 65, 70, 75, 80, 85, 90, 95, 100, or in a range defined by any two of these values.

After in-depth research, the inventors of this application have found that through the synergistic controlling of the lithium salt concentration and the mass percentage of the first solvent to satisfy the foregoing relations, the structure of the solid electrolyte interface (SEI) film on the negative electrode can be improved, making the deposition and peeling process of lithium metal on the negative electrode more uniform, thereby improving the cycling performance of the lithium metal battery. In addition, the ion conductivity of the SEI film is improved and the consumption of electrolyte during cycling is reduced, thereby reducing the percentage of the electrolyte and improving the safety performance of the lithium metal battery.

In an embodiment of the application, solubility of the lithium salt in the first solvent is C g/100 g, satisfying: $0.01 \leq C \leq 5$, for example, C may be 0.01, 0.05, 0.1, 0.2, 0.5, 1, 1.5, 2, 2.5, 3, 3.5, 4, 4.5, 5, or in a range defined by any two of these values. The applicant has found through research that when the solubility of the lithium salt in the first solvent is controlled within the foregoing range, the lithium ion coordination and the corresponding solvation structure in the electrolyte are in the form of polymeric ion pairs, with a lower highest occupied molecular orbital (HOMO) and a higher lowest unoccupied molecular orbital (LUMO). This enhances the electrochemical stability and allows the formation of a stable SEI film on the negative electrode, thereby improving the cycling performance and safety performance of the lithium metal battery.

In an embodiment of the application, a mass percentage of a total mass of the electrolyte to a mass of the lithium metal battery is D%, satisfying $2 \leq D \leq 15$, for example, D may be 2, 4, 6, 8, 10, 12, 15, or in a range defined by any two of these values. The applicant has found through research that when the mass percentage of the electrolyte is too low (D is less than 2), the electrolyte cannot sufficiently wet the inside of pores at the positive electrode, resulting in insufficient lithium ion channels during cycling, and leading to rapid attenuation of the lithium metal battery; when the percentage of the electrolyte is too high (D is greater than 15), the electrolyte distribution is uneven, and a large amount of by-products are generated from the reaction between the electrolyte and the negative electrode, deteriorating both cycling performance and safety performance; and when the mass percentage of the electrolyte is controlled within the foregoing range, the electrolyte sufficiently wets the pores, providing sufficient electron pathways with minimal by-products, thereby improving the cycling performance and safety performance of the lithium metal battery.

In an embodiment of the application, the lithium salt includes at least one of lithium perchlorate, lithium hexafluoroarsenate, lithium hexafluorophosphate, lithium bistrifluoromethanesulfonimide, lithium bisfluorosulfonimide,

lithium difluoroxaloborate, lithium tetrafluoroborate, or lithium trifluoromethanesulfonate. In this application, based on the total mass of the electrolyte, a mass percentage of the lithium salt is 15% to 60%, for example, 15%, 30%, 45%, 60%, or in a range defined by any two of these values. Without wishing to be bound by any theory, the applicant has found through research that when the foregoing lithium salt is selected, a higher ionic conductivity is obtained, and thus the cycling performance of the lithium metal battery can be improved.

In an embodiment of the application, the first solvent includes at least one of the compounds represented by the following general formulas:

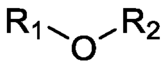 ,
(I)

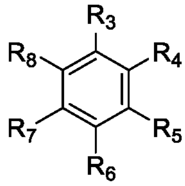 ,
(II)

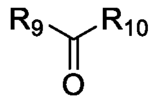 ,
(III)

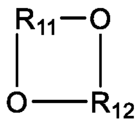 , or
(IV)

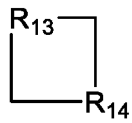 ,
(V)

where

- $R_1$ and $R_2$ are each independently selected from $C_1$ to $C_{10}$ alkyl, $C_2$ to $C_{10}$ alkenyl, $C_1$ to $C_{10}$ haloalkyl, $C_2$ to $C_{10}$ silyl, $C_2$ to $C_{10}$ haloalkenyl, $C_6$ to $C_{26}$ aryl, $C_6$ to $C_{26}$ haloaryl, or $C_1$ to $C_{10}$ alkyl oxygen;
- $R_3$ to $R_8$ are each independently selected from -F, -H, $C_1$ to $C_{10}$ haloalkyl, or $C_2$ to $C_{10}$ haloalkenyl.
- $R_9$ and $R_{10}$ are each independently selected from $C_1$ to $C_{10}$ alkyl, $C_2$ to $C_{10}$ alkenyl, $C_1$ to $C_{10}$ haloalkyl, $C_2$ to $C_{10}$ silyl, $C_2$ to $C_{10}$ haloalkenyl, $C_6$ to $C_{26}$ aryl, $C_6$ to $C_{26}$ haloaryl, or $C_1$ to $C_{10}$ haloalkyl oxygen;
- $R_{11}$ and $R_{12}$ are each independently selected from $C_1$ to $C_{10}$ alkyl, $C_2$ to $C_{10}$ alkenyl, $C_1$ to $C_{10}$ haloalkyl, $C_2$ to $C_{10}$ silyl, or $C_2$ to $C_{10}$ haloalkenyl; and
- $R_{13}$ and $R_{14}$ are each independently selected from $C_1$ to $C_{10}$ alkyl, $C_2$ to $C_{10}$ alkenyl, $C_1$ to $C_{10}$ haloalkyl, or $C_2$ to $C_{10}$ haloalkenyl.

Without wishing to be bound by any theory, when a solvent within the foregoing range is selected as the first solvent, the cycling performance and safety performance of the lithium metal battery can be further improved.

In an embodiment of the application, the first solvent includes at least one of the compounds represented by the following formulas:

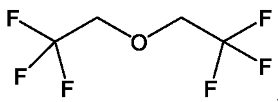 ,
(I-1)

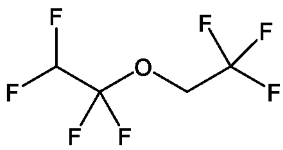 ,
(I-2)

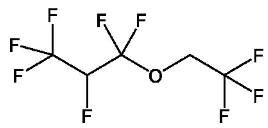 ,
(I-3)

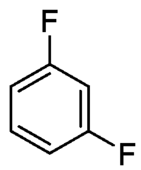 ,
(II-1)

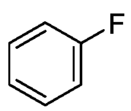 ,
(II-2)

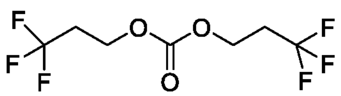 ,
(III-1)

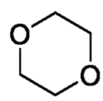 , or
(IV-1)

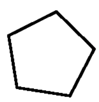
(V-1)

Without wishing to be bound by any theory, the applicant has found through research that when the foregoing fluorine-containing solvent is selected as the first solvent, a stable SEI film with high ionic conductivity containing a higher amount of lithium fluoride (LiF) can be generated, thereby improving the cycling performance and safety performance of the lithium metal battery.

In an embodiment of the application, the electrolyte further includes a second solvent, where the second solvent includes at least one of carbonate compound, carboxylate compound, sulfur-oxygen double bond containing compound, acid anhydride, amide compound, nitrile compound, ether compound, thioether compound, phosphate ester compound, or ionic liquid containing organic cations. Without wishing to be bound by any theory, the applicant has found through research that through the selection of the foregoing non-aqueous solvent as the second solvent, the lithium salt in the system can be dissociated, which ensures the rapid transport of lithium ions and increases the kinetics performance of the lithium metal battery system, thereby improving the cycling performance and safety performance of the lithium metal battery.

In an embodiment of this application, the carbonate compound includes at least one of ethylene carbonate, propylene carbonate, dimethyl carbonate, diethyl carbonate, dipropyl carbonate, ethyl methyl carbonate, methyl propyl carbonate, vinylene carbonate, or fluoroethylene carbonate; the carboxylate compound includes at least one of methyl formate, ethyl acetate, propyl acetate, ethyl propionate, propyl propionate, or $\gamma$-butyrolactone; the sulfur-oxygen double bond containing compound includes at least one of vinyl sulfite, propylene sulfite, dimethyl sulfite, diethyl sulfite, diethyl sulfate, dimethyl sulfone, diethyl sulfone, dimethyl sulfoxide, diethyl sulfoxide, sulfolane, or N,N-dimethyltrifluoromethanesulfonamide; the acid anhydride includes acetic anhydride and/or propionic anhydride; the amide compound includes at least one of N-methylpyrrolidone, N-methylformamide, N-methylacetamide, or N,N-dimethylformamide; the nitrile compound includes at least one of acetonitrile, propionitrile, or butyronitrile; the ether compound includes at least one of tetrahydrofuran, glycol dimethyl ether, ethylene glycol diethyl ether, ethylene glycol dipropyl ether, ethylene glycol dibutyl ether, diethylene glycol dimethyl ether, triethylene glycol dimethyl ether, or tetraethylene glycol dimethyl ether; the thioether compound includes diethyl sulfide and/or methyl sulfide; the phosphate ester compound includes at least one of trimethyl phosphate, triethyl phosphate, 2-ethoxy-2-oxo-1,3,2-dioxaphospholane, or 2-trifluoroethoxy-2-oxo-1,3,2-dioxaphospholane; and the ionic liquid containing organic cations includes at least one of ionic liquids containing 1-butyl-3-methylimidazolyl cations, 1-methyl-1-ethylpyrrolidinyl cations, or N-butyl-N-methylpiperidine cations, for example, the ionic liquid containing organic cations may be 1-butyl-3-methylimidazole bisfluorosulfonimide salt. Without wishing to be bound by any theory, the applicant has found through research that through the selection of the foregoing non-aqueous solvent as the second solvent, the lithium salt in the system can be dissociated, thereby further improving the cycling performance and safety performance of the lithium metal battery.

In an embodiment of the application, based on the total mass of the solvent in the electrolyte, a mass percentage of the second solvent is 10% to 60%, for example, 10%, 15%, 20%, 25%, 30%, 35%, 40%, 45%, 50%, 55%, 60%, or in a range defined by any two of these values. The applicant has found through research that when the mass percentage of the second solvent is too high (higher than 60%), the concentration of lithium ions in the electrolyte is diluted, leading to cycling attenuation; and when the mass percentage of the second solvent is too low (lower than 10%), the dissociation of lithium salts in the electrolyte is insufficient, and lithium salts are prone to deposition at low temperatures.

In an embodiment of the application, the electrolyte further includes a third component, where the third component includes at least one of vinyl ethylene carbonate, methylene methane disulfonate, 4-trifluoromethylethylene carbonate, 1,3,2-dioxazothiophene-2,2-dioxide, succinic anhydride, propenyl-1,3-sultone, bis(trimethylsilyl)sulfate, N-methyl, butylpyrrolidine bistrifluoromethanesulfonimide salt, N-methyl, propylpiperidine bis trifluoromethanesulfonimide salt, 1,2-bis(cyanoethoxy)ethane, adiponitrile, 1,3,5-pentanetricarbonitrile, fumaronitrile, or 1,2,3-tris(2-cyanoethoxy) propane. The applicant has found through research that when the foregoing compound is selected as the third component, the foregoing compound can decompose into a film on the surface of the negative electrode plate, protecting the stability of the negative electrode during cycling, and thus the cycling performance of the lithium metal battery can be improved.

In an embodiment of the application, based on a total mass of the electrolyte, a mass percentage of the third component is 0.01% to 10%, for example, 0.01%, 0.05%, 0.1%, 0.5%, 1%, 1.5%, 2.5%, 3.5%, 4.5%, 5.5%, 6.5%, 7.5%, 8.5%, 9.5%, 10%, or in a range defined by any two of these values. The applicant has found through research that when the mass percentage of the third component is too high (higher than 10%), the coordination structure of lithium ions may be destroyed, which may increase the film-forming impedance, and deteriorate the cycling performance; and when the mass percentage of the third component is too low (lower than 0.01%), the improvement in cycling performance and safety performance of the lithium metal battery is not significant.

In an embodiment of the application, porosity of the positive electrode plate is E%, satisfying $5 \leq E \leq 35$, for example, E may be 5, 10, 15, 20, 25, 30, 35, or in a range defined by any two of these values; and $0.5 \leq E/D \leq 15$, for example, E/D may be 0.5, 1, 1.5, 3.5, 5.5, 7.5, 9.5, 12.5, 15, or in a range defined by any two of these values. The applicant has found through research that when the porosity of the positive electrode plate is too high (E greater than 35), the electrolyte content required for infiltrating the electrode plate is high, leading to a decrease in safety performance; and when the porosity of the positive electrode plate is too low (E less than 0.5), the ion channels in the positive electrode plate

are insufficient, resulting in high polarization impedance of the lithium metal battery, leading to deterioration of kinetic performance and cycling performance.

This application has the following beneficial effects:

In the lithium metal battery and electronic apparatus provided in this application, a reduction in the electrolyte injection volume in the lithium metal battery is implemented through the adjustment of components of a fluorine-containing solvent in the electrolyte and components and structure of the SEI film at the negative electrode side. This results in a more uniform deposition/peeling process at the lithium metal negative electrode, significantly improving the cycling performance of the lithium metal battery. In addition, higher ion conductivity of the SEI film eliminates the need for a significant amount of electrolyte consumed during cycling, without affecting the charge and discharge performance of the battery, thereby achieving a way to enhance safety by reducing the electrolyte injection volume.

## BRIEF DESCRIPTION OF DRAWINGS

To describe technical solutions in embodiments of this application and the prior art more clearly, the following briefly describes accompanying drawings required in the embodiments and the prior art. Apparently, the accompanying drawings in the following descriptions show merely some embodiments in this application, and a person of ordinary skill in the art may derive other accompanying drawings from these accompanying drawings.

FIG. 1 is a surface scanning electron microscope image of the negative electrode plate in Example 1;
FIG. 2 is a surface scanning electron microscope image of the negative electrode plate in Example 2;
FIG. 3 is an enlarged scanning electron microscope image of a cross section of the negative electrode plate in Example 1;
FIG. 4 is a scanning electron microscope image of a cross section of the negative electrode plate in Example 1; and
FIG. 5 shows charge-discharge curves for different cycles at 25°C in Example 1.

## DESCRIPTION OF EMBODIMENTS

To make the objectives, technical solutions, and advantages of this application more comprehensible, the following describes this application in detail with embodiments listed with reference to the accompanying drawings. Apparently, the described embodiments are merely some rather than all of the embodiments of this application. All other embodiments obtained by a person of ordinary skill in the art based on embodiments in this application shall fall within the protection scope of this application.

The positive electrode plate in this application is not particularly limited, provided that the purpose of this application can be achieved. The positive electrode plate usually includes a positive electrode current collector and a positive electrode active material. The positive electrode current collector is not particularly limited and may be any positive electrode current collector well-known in the art, for example, copper foil, aluminum foil, aluminum alloy foil, or composite current collector. The positive electrode active material is not particularly limited, and may be any positive electrode active material in the prior art. For example, it may include at least one of lithium nickel cobalt manganate, lithium nickel cobalt aluminate, lithium iron phosphate, lithium cobalt oxide, lithium manganate, or lithium iron manganese phosphate.

In this application, thicknesses of the positive electrode current collector and the positive electrode active material are not particularly limited, provided that the objectives of this application can be achieved. For example, the thickness of the positive electrode current collector is 8 $\mu$m to 12 $\mu$m, and the thickness of the positive electrode active material is 30 $\mu$m to 120 $\mu$m.

In this application, the positive electrode material layer may further include a conductive agent. The conductive agent is not particularly limited in this application, provided that the objectives of this application can be achieved. For example, the conductive agent may include but is not limited to at least one of conductive carbon black (Super P), a carbon nanotube (CNTs), carbon fiber, flake graphite, Ketjen black, graphene, a metal material, or a conductive polymer. The above carbon nanotube may include but is not limited to a single-walled carbon nanotube and/or a multi-walled carbon nanotube. The above carbon fiber may include but is not limited to vapor-phase carbon fiber (VGCF) and/or nano-carbon fiber. The above metal material may include but is not limited to metal powder and/or metal fiber. Specifically, the metal may include but is not limited to at least one of copper, nickel, aluminum, or silver. The above conductive polymer may include but is not limited to at least one of polyphenylene derivative, polyaniline, polythiophene, polyacetylene, or polypyrrole.

The positive electrode active material layer in this application may further include a binder. The binder is not particularly limited in this application, provided that the objectives of this application can be achieved. For example, the binder may include but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, and the like.

Optionally, the positive electrode may further include a conductive layer, and the conductive layer is sandwiched between the positive electrode current collector and the positive electrode material layer. Composition of the conductive layer is not particularly limited in this application, and the conductive layer may be a conductive layer commonly used in the art. For example, the conductive layer may include but is not limited to the foregoing conductive agent and binder.

The negative electrode plate in this application is not particularly limited, provided that the purpose of this application can be achieved. The negative electrode plate may include a negative electrode active material layer, where the negative electrode active material layer may include metallic lithium or a compound thereof, a layer of a lithium alloy, a lithium-copper composite, and the like. The negative electrode plate may further include a negative electrode current collector, where the negative electrode current collector is configured to support the negative electrode active material layer and conduct a current. The shape of the negative electrode current collector may be in the form of a foil or a mesh. The negative current collector may be made of copper, nickel, or stainless steel.

In this application, the negative electrode material layer may further include a conductive agent. The conductive agent is not particularly limited in this application, provided that the objectives of this application can be achieved. For example, the conductive agent may include but is not limited to at least one of the foregoing conductive agents.

In this application, the negative electrode material layer may further include a binder. The binder is not particularly limited in this application, provided that the objectives of this application can be achieved. For example, the binder may include but is not limited to at least of the foregoing binders.

Optionally, the negative electrode may further include a conductive layer, and the conductive layer is sandwiched between the negative electrode current collector and the negative electrode material layer. Composition of the conductive layer is not particularly limited in this application, and the conductive layer may be a conductive layer commonly used in the art. The conductive layer may include but is not limited to the foregoing conductive agent and binder.

The separator is not particularly limited in this application, provided that the objectives of this application can be achieved. The separator substrate may be selected from at least one of polyethylene (PE), polypropylene (PP), polyethylene terephthalate (PET), polyimide (PI), or aramid fiber. For example, polyethylene includes at least one composition selected from high-density polyethylene, low-density polyethylene, and ultra-high-molecular-weight polyethylene. In particular, polyethylene and polypropylene can prevent a short circuit excellently, and can improve stability of an electrochemical apparatus through a shutdown effect. The separator in this application may have a porous structure, and a pore size is not particularly limited, provided that the objectives of this application can be achieved. For example, the pore size may be 0.01 $\mu$m to 1 $\mu$m. Thickness of the separator is not particularly limited in this application, provided that the objectives of this application can be achieved. For example, the thickness of the separator may be 5 $\mu$m to 500 $\mu$m.

In this application, the electrolyte may further include another non-aqueous solvent. The another non-aqueous solvent is not particularly limited in this application, provided that the objectives of this application can be achieved. For example, the non-aqueous solvent may include one or more of ethyl propyl carbonate (EPC), butylene carbonate (BC), tert-butyl acetate, decanolide, valerolactone, mevalonolactone or caprolactone, tetraglyme, diglyme, 1,2-diethoxyethane, and ethoxymethoxyethane. Based on the total mass of the electrolyte, a mass percentage of the another non-aqueous solvent is 1% to 50%, for example, 1%, 5%, 10%, 15%, 20%, 30%, 35%, 40%, 45%, 50%, or in a range defined by any two of these values.

The electronic apparatus in this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

A process for preparing the lithium metal battery is well known to persons skilled in the art, and is not particularly limited in this application. For example, the lithium metal battery may be manufactured in the following process: The positive electrode and the negative electrode are stacked with the separator therebetween, and are put into a housing after operations such as winding and folding as needed, an electrolyte is injected into the housing, and the housing is sealed. In addition, an overcurrent protection element, a guide, or the like may also be placed into the housing as needed, so as to prevent pressure inside the lithium metal battery from rising too high, and the lithium ion battery from over-charging and over-discharging.

The following describes the embodiments of this application more specifically by using examples and comparative examples. Various tests and evaluations were performed in the following methods. In addition, unless otherwise specified, "part" and "%" are based on weight.

Specific test method and device

**Cycling performance test method:**

The lithium metal battery was placed in a 25°C thermostat, charged to 4.5 V at a constant current of 0.5C, charged to 0.05C at a constant voltage, and then discharged to 3.0 V at a constant current of 1.0C, which was one charge and discharge cycle. 100 charge and discharge cycles were performed in the foregoing manner, and a capacity retention rate was monitored, where

capacity retention rate = remaining discharge capacity/initial discharge capacity × 100%.

**Hot box test method:**

The lithium metal battery was charged to 4.2 V at a constant current of 0.5C at 20±5°C, and then charged to 0.05C at a constant voltage of 4.2 V The furnace temperature was set to 25°C. After the battery was left standing for 30 min, the temperature was raised to the specified temperature ±2°C at a rate of 5±2°C/min. Then the temperature was maintained for 60 min. The changes of voltage, surface temperature of the lithium metal battery, and furnace temperature, and whether there was electrolyte leakage, fire, or explosion were monitored during the process.

**Electrolyte mass test:**

The lithium metal battery was disassembled and placed into a sample box, in which dimethyl carbonate (DMC) was poured, such that the battery electrode plates were fully soaked in the DMC solution. After the battery electrode plates were soaked for 8 hours, the DMC solution was changed to a fresh DMC solution. Then, the battery electrode plates were soaked in the DMC solution overnight (14 h). The soaked lithium metal battery was taken out and placed in a beaker, and then placed in a vacuum drying oven for overnight drying (14 h). Based on the mass difference of the lithium metal battery before soaking and after drying, the mass percentage of the electrolyte in the lithium metal battery was calculated:

electrolyte mass percentage = electrolyte mass/lithium metal battery mass × 100%.

**Porosity test method:**

The porosity of the electrode plate was tested using a gas displacement method: the pore volume in the sample accounts for E% of the total volume of the sample.

The electrode plate under test was punched into small circular pieces of fixed-size (diameter d = 10 mm) and regular shape. A sample piece of a certain mass was weighed and placed in a true density tester (AccuPyc II 1340). In a sealed testing system, inert gas was introduced, and the true volume $V_0$ of the sample was measured. The apparent volume V was calculated based on the area and thickness of the sample piece. The porosity was calculated as follows:

$$E\% = [(V-V_0)/V] \times 100\%.$$

**Deposition morphology test:**

After the lithium metal battery was subjected to 5 cycles at a current of 0.2C, the lithium metal battery was disassembled to obtain a negative electrode plate. The negative electrode plate was cut into small pieces (10 mm × 10 mm) and placed in a scanning electron microscope (SEM) (ZEISS SEM (Sigma-02-33)), to observe the surface morphology of the negative electrode plate at different magnifications.

**Example 1**

(1) Preparation of electrolyte

In an argon atmosphere glove box with a water content of < 10 ppm, the solvents were mixed at a ratio as shown in Table 1, with the remainder being ethylene carbonate. Lithium bisfluorosulfonimide was added into the resulting solution according to the lithium salt concentration in Table 1 to prepare an electrolyte.

(2) Preparation of positive electrode plate

A positive electrode active material NCM811 ($LiNi_{0.8}Mn_{0.1}Co_{0.1}O_2$), a conductive agent acetylene black, and a binder polyvinylidene fluoride (PVDF) were mixed at a weight ratio of 96:2:2, with N-methylpyrrolidone (NMP) added as a solvent, to prepare a slurry with a solid content of 75%, and the slurry was stirred under an action of a vacuum mixer to prepare a uniform positive electrode slurry. The positive electrode slurry was evenly applied onto a positive electrode current collector aluminum foil with a thickness of 10 μm and dried at 90°C to produce a positive electrode plate having a positive electrode active material coated on one surface, with a positive electrode active material layer of 110 μm in thickness. After the foregoing steps were completed, single surface coating of the positive electrode plate was completed. Then, the foregoing steps were repeated on the other surface of the positive electrode plate so as to obtain a positive electrode plate with two surfaces coated with the positive electrode active material. After the coating was completed, the positive electrode plate was cut into required specifications for later use after cold pressing. According to the test, the porosity of the positive electrode plate was 17.9%.

(3) Preparation of negative electrode plate

A metallic lithium foil was placed on one surface of a negative electrode current collector copper foil with a thickness of 8 □m, and then it was rolled by a suitable force to combine the metallic lithium and the current collector to obtain a single-sided negative electrode plate. Then, the foregoing steps were repeated on the other surface of the negative electrode plate so as to obtain a negative electrode plate with two surfaces applied with the negative electrode active material.

(4) Separator

A polyethylene (PE) porous polymer film was used as a separator.

(5) Preparation of lithium metal battery

The positive electrode plate, the separator, and the negative electrode plate were stacked in sequence such that the separator was sandwiched between the positive electrode plate and the negative electrode plate for separation. The resulting stack was wound and adhesive was applied to secure the tail. Subsequently, the stack was placed in a punched aluminum foil bag, edges of the aluminum foil bag were sealed, and then the bag was placed in an 85°C vacuum oven for drying for 12 h to remove moisture in the dry cell. The prepared electrolyte was injected into the vacuum-dried battery, followed by processes such as vacuum packaging, standing, formation, and shaping to complete preparation of the lithium metal battery.

**Example 2** to **Example 20**

These examples were the same as Example 1 except that the types and percentages of the solvents were adjusted according to Table 1.

**Comparative Example 1** to **Comparative Example 3**

These examples were the same as Example 1 except that related preparation parameters were adjusted according to Table 1.

**Table 1**

| Example | A (mol/L) | First solvent | B (wt%) | A × B | C | D (wt%) | Capacity retention rate after 100 cycles | Hot box test (°C) |
|---|---|---|---|---|---|---|---|---|
| 1 | 2 | I-1 | 20 | 40 | 0.1 | 5 | 83.9% | 130 |
| 2 | 2 | I-1 | 25 | 50 | 0.1 | 5 | 86.7% | 131 |
| 3 | 2 | I-1 | 30 | 60 | 0.1 | 5 | 84.8% | 133 |
| 4 | 2 | I-1 | 50 | 100 | 0.1 | 5 | 86.4% | 133 |
| 5 | 3 | I-1 | 15 | 45 | 0.1 | 10 | 84.5% | 130 |
| 6 | 3 | I-1 | 25 | 75 | 0.1 | 10 | 85.0% | 132 |
| 7 | 3 | I-1 | 30 | 90 | 0.1 | 10 | 85.5% | 131 |
| 8 | 4 | I-1 | 10 | 40 | 0.1 | 15 | 83.2% | 130 |
| 9 | 3 | II-1 | 30 | 90 | 0.5 | 10 | 85.2% | 130 |
| 10 | 3 | III-1 | 30 | 90 | 1 | 10 | 84.9% | 132 |
| 11 | 3 | IV-1 | 30 | 90 | 3 | 10 | 84.4% | 131 |
| 12 | 3 | V-1 | 30 | 90 | 0.01 | 10 | 86.1% | 129 |
| 13 | 3 | I-1<br>II-1 | 15<br>15 | 90 | 0.1 | 10 | 85.4% | 130 |
| 14 | 3 | I-1<br>III-1 | 15<br>15 | 90 | 0.5 | 10 | 84.5% | 131 |
| 15 | 3 | I-1<br>IV-1 | 15<br>15 | 90 | 1 | 10 | 84.4% | 131 |
| 16 | 3 | I-1<br>V-1 | 15<br>15 | 90 | 0.1 | 10 | 85.7% | 130 |
| 17 | 3 | II-1<br>V-1 | 15<br>15 | 90 | 0.1 | 10 | 85.4% | 130 |
| 18 | 3 | I-1<br>II-1<br>IV-1 | 10<br>10<br>10 | 90 | 0.1 | 10 | 85.3% | 131 |
| 19 | 3 | I-1<br>III-1<br>IV-1 | 10<br>10<br>10 | 90 | 0.5 | 10 | 85.0% | 132 |
| 20 | 3 | I-1<br>III-1<br>V-1 | 10<br>10<br>10 | 90 | 0.1 | 10 | 85.7% | 131 |
| Comparative Example | | | | | | | | |
| 1 | 1 | I-1 | 10 | 10 | 0.1 | 10 | 60.0% | 127 |
| 2 | 4.5 | I-1 | 10 | 45 | 0.1 | 10 | 70.1% | 125 |

| | | | | | | | | |
|---|---|---|---|---|---|---|---|---|
| 3 | 2 | I-1 | 60 | 120 | 0.1 | 10 | 76.9% | 123 |

As can be seen from Table 1 and FIGs. 1 to 5, the performance of the lithium metal batteries in Examples 1 to 20 and Comparative Examples 1 to 3 varies with changes in the lithium salt, the first solvent, and the electrolyte. As can be seen from Examples 5 to 7 and Comparative Examples 1 and 2, when the molar concentration of the lithium salt and the mass percentage of the first solvent are within the ranges of this application, and A × B satisfies the requirements of Claim 1 of this application, the prepared lithium metal battery has better cycling performance and safety performance.

**Example 21** to **Example 26**

These examples were the same as Example 2 except that the related preparation parameters and performance parameters were as shown in Table 2.

**Example 27** and **Example 28**

These examples were the same as Example 7 except that the related preparation parameters and performance parameters were as shown in Table 2.

**Table 2**

| Example | A (mol/L) | B (wt%) | Second solvent | Percentage (wt%) | Third component | Percentage (wt%) | Capacity retention rate after 100 cycles (%) | Hot box test (°C) |
|---|---|---|---|---|---|---|---|---|
| Example 21 | 3 | 30 | Dimethyl carbonate | 20 | / | / | 86.9 | 131 |
| Example 22 | 2 | 25 | Dimethyl carbonate | 20 | Fluoroethylene carbonate | 1 | 87.2 | 132 |
| Example 23 | 2 | 25 | Dimethyl carbonate | 60 | Fluoroethylene carbonate | 1 | 87.6 | 132 |
| Example 24 | 2 | 25 | Dimethyl carbonate | 40 | Fluoroethylene carbonate | 5 | 87.9 | 132 |
| Example 25 | 2 | 25 | Dimethyl carbonate | 40 | Fluoroethylene carbonate | 10 | 87.9 | 132 |
| Example 26 | 3 | 30 | Diethyl carbonate | 40 | Adiponitrile | 3 | 88.3 | 136 |
| Example 27 | 3 | 30 | Ethyl methyl carbonate | 40 | Adiponitrile | 3 | 87.8 | 134 |
| Example 28 | 3 | 30 | Trimethyl phosphate | 40 | 1,3-sultone | 2 | 87.2 | 137 |

As can be seen from Example 21 to Example 28, the cycling performance and safety performance of lithium metal batteries vary with changes in the second solvent and the third component. As can be seen from Example 22 and Example 23, the lithium metal batteries using the type and mass percentage of the second solvent within the ranges of this application can have better cycling performance and safety performance; and the types of the second solvent and the third component also affect the cycling performance and safety performance of the lithium metal batteries. As can be seen from Example 26 to Example 28, cycling performance and safety performance of lithium metal batteries using the types of the second solvent and the third component within the ranges of this application are obviously improved.

**Example 29, Example 30,** and **Example 35** to **Example 38**

These examples were the same as Example 1 except that the related preparation parameters and performance parameters were as shown in Table 3.

**Example 31**

This example was the same as Example 12 except that the related preparation parameters and performance parameters were as shown in Table 3.

**Example 32**

This example was the same as Example 9 except that the related preparation parameters and performance parameters were as shown in Table 3.

**Example 33**

This example was the same as Example 10 except that the related preparation parameters and performance parameters were as shown in Table 3.

**Example 34**

This example was the same as Example 11 except that the related preparation parameters and performance parameters were as shown in Table 3.

**Table 3**

| | A (mol/L) | B (wt%) | C | D (wt%) | E (%) | E/D | Capacity retention rate after 100 cycles (%) | Hot box test (°C) |
|---|---|---|---|---|---|---|---|---|
| Example 29 | 2 | 25 | 0.1 | 5 | 20 | 4 | 86.7 | 131 |
| Example 30 | 3 | 30 | 0.1 | 5 | 20 | 4 | 85.5 | 131 |
| Example 31 | 2 | 25 | 0.0 1 | 5 | 5 | 1 | 88.2 | 135 |
| Example 32 | 2 | 25 | 0.5 | 5 | 10 | 2 | 87.9 | 127 |
| Example 33 | 2 | 25 | 1 | 5 | 30 | 6 | 86.8 | 127 |
| Example 34 | 2 | 25 | 3 | 5 | 35 | 7 | 86.1 | 129 |
| Example 35 | 3 | 30 | 0.1 | 8 | 20 | 2.5 | 89.3 | 136 |
| Example 36 | 3 | 30 | 0.1 | 10 | 10 | 1 | 87.8 | 134 |
| Example 37 | 3 | 30 | 0.1 | 10 | 15 | 1.5 | 87.9 | 133 |
| Example 38 | 3 | 30 | 0.1 | 15 | 9 | 0.6 | 86.4 | 128 |

As can be seen from Examples 29 to 38, the cycling performance and safety performance of lithium metal batteries vary with changes in porosity of positive electrode plate and the ratio of the porosity to the electrolyte mass percentage. The ratio of the porosity of the positive electrode plate to the electrolyte mass percentage usually also affects the cycling performance and safety performance of the lithium metal battery. If the E/D ratio is within the range of this application, the cycling performance of the lithium metal battery will be obviously improved under conditions where the mass percentage of electrolyte is constant and the electrolyte content in the lithium metal battery is higher.

The foregoing descriptions are merely preferred embodiments of this application, but are not intended to limit this application. Any modifications, equivalent replacements, and improvements made without departing from the spirit and principle of this application shall fall within the protection scope of this application.

**Claims**

**1.** A lithium metal battery, comprising a positive electrode plate, a negative electrode plate, and an electrolyte, wherein

the electrolyte comprises a lithium salt and a solvent, a molar concentration of the lithium salt is A mol/L, and $2 \leq A \leq 4$; and the solvent comprises a first solvent, and based on a total mass of the solvent in the electrolyte, a mass percentage of the first solvent is B%, satisfying $10 \leq B \leq 50$; wherein A and B satisfy a relation: $40 \leq A \times B \leq 100$.

**2.** The lithium metal battery according to claim 1, wherein solubility of the lithium salt in the first solvent is C g/100 g, satisfying: $0.01 \leq C \leq 5$.

**3.** The lithium metal battery according to claim 1, wherein a mass fraction of a total mass of the electrolyte to a mass of the lithium metal battery is D%, satisfying $2 \leq D \leq 15$.

**4.** The lithium metal battery according to claim 1, wherein the lithium salt comprises at least one of lithium perchlorate, lithium hexafluoroarsenate, lithium hexafluorophosphate, lithium bistrifluoromethanesulfonimide, lithium bisfluorosulfonimide, lithium difluoroxaloborate, lithium tetrafluoroborate, or lithium trifluoromethanesulfonate.

**5.** The lithium metal battery according to claim 1, wherein the first solvent comprises at least one of the compounds represented by the following general formulas:

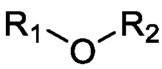 ,
(I)

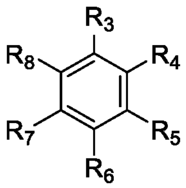 ,
(II)

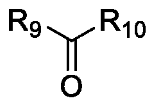 ,
(III)

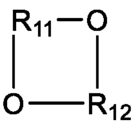 , or
(IV)

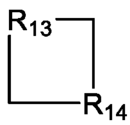 ,
(V)

wherein

$R_1$ and $R_2$ are each independently selected from $C_1$ to $C_{10}$ alkyl, $C_2$ to $C_{10}$ alkenyl, $C_1$ to $C_{10}$ haloalkyl, $C_2$ to $C_{10}$ silyl, $C_2$ to $C_{10}$ haloalkenyl, $C_6$ to $C_{26}$ aryl, $C_6$ to $C_{26}$ haloaryl, or $C_1$ to $C_{10}$ alkyl oxygen;
$R_3$ to $R_8$ are each independently selected from -F, -H, $C_1$ to $C_{10}$ haloalkyl, or $C_2$ to $C_{10}$ haloalkenyl.
$R_9$ and $R_{10}$ are each independently selected from $C_1$ to $C_{10}$ alkyl, $C_2$ to $C_{10}$ alkenyl, $C_1$ to $C_{10}$ haloalkyl, $C_2$ to $C_{10}$ silyl, $C_2$ to $C_{10}$ haloalkenyl, $C_6$ to $C_{26}$ aryl, $C_6$ to $C_{26}$ haloaryl, or $C_1$ to $C_{10}$ haloalkyl oxygen;
$R_{11}$ and $R_{12}$ are each independently selected from $C_1$ to $C_{10}$ alkyl, $C_2$ to $C_{10}$ alkenyl, $C_1$ to $C_{10}$ haloalkyl, $C_2$ to $C_{10}$ silyl, or $C_2$ to $C_{10}$ haloalkenyl; and
$R_{13}$ and $R_{14}$ are each independently selected from $C_1$ to $C_{10}$ alkyl, $C_2$ to $C_{10}$ alkenyl, $C_1$ to $C_{10}$ haloalkyl, or $C_2$ to $C_{10}$ haloalkenyl.

**6.** The lithium metal battery according to claim 1, wherein the first solvent comprises at least one of the compounds represented by the following formulas:

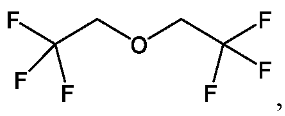 ,
(I-1)

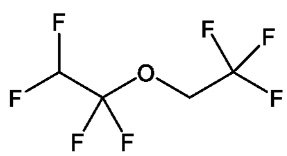 ,
(I-2)

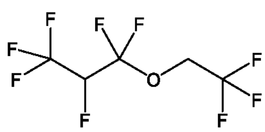 ,
(I-3)

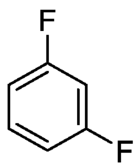 ,
(II-1)

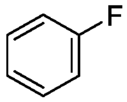
(II-2),
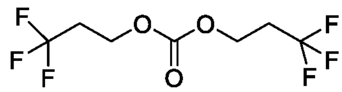
(III-1),
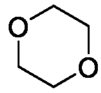
(IV-1), or
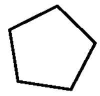
(V-1)

7. The lithium metal battery according to claim 1, wherein the electrolyte further comprises a second solvent, and the second solvent comprises at least one of carbonate compound, carboxylate compound, sulfur-oxygen double bond containing compound, acid anhydride, amide compound, nitrile compound, ether compound, thioether compound, phosphate ester compound, or ionic liquid containing organic cations.

8. The lithium metal battery according to claim 7, wherein the carbonate compound comprises at least one of ethylene carbonate, propylene carbonate, dimethyl carbonate, diethyl carbonate, dipropyl carbonate, ethyl methyl carbonate, methyl propyl carbonate, vinylene carbonate, or fluoroethylene carbonate; the carboxylate compound comprises at least one of methyl formate, ethyl acetate, propyl acetate, ethyl propionate, propyl propionate, or γ-butyrolactone; the sulfur-oxygen double bond containing compound comprises at least one of vinyl sulfite, propylene sulfite, dimethyl sulfite, diethyl sulfite, diethyl sulfate, dimethyl sulfone, diethyl sulfone, dimethyl sulfoxide, diethyl sulfoxide, sulfolane, or N,N-dimethyltrifluoromethanesulfonamide; the acid anhydride comprises acetic anhydride and/or propionic anhydride; the amide compound comprises at least one of N-methylpyrrolidone, N-methylformamide, N-methylacetamide, or N,N-dimethylformamide; the nitrile compound comprises at least one of acetonitrile, propionitrile, or butyronitrile; the ether compound comprises at least one of tetrahydrofuran, glycol dimethyl ether, ethylene glycol diethyl ether, ethylene glycol dipropyl ether, ethylene glycol dibutyl ether, diethylene glycol dimethyl ether, triethylene glycol dimethyl ether, or tetraethylene glycol dimethyl ether; the thioether compound comprises diethyl sulfide and/or methyl sulfide; the phosphate ester compound comprises at least one of trimethyl phosphate, triethyl phosphate, 2-ethoxy-2-oxo-1,3,2-dioxaphospholane, or 2-trifluoroethoxy-2-oxo-1,3,2-dioxaphospholane; and the ionic liquid containing organic cations comprises at least one of ionic liquids containing 1-butyl-3-methylimidazolyl cations, 1-methyl-1-ethylpyrrolidinyl cations, or N-butyl-N-methylpiperidine cations.

9. The lithium metal battery according to claim 7, wherein based on the total mass of the solvent in the electrolyte, a mass percentage of the second solvent is 10% to 60%.

10. The lithium metal battery according to claim 1, wherein the electrolyte further comprises a third component, the third component comprising at least one of vinyl ethylene carbonate, methylene methane disulfonate, 4-trifluoromethylethylene carbonate, 1,3,2-dioxazothiophene-2,2-dioxide, succinic anhydride, propenyl-1,3-sultone, bis(trimethylsilyl)sulfate, N-methyl, butylpyrrolidine bistrifluoromethanesulfonimide salt, N-methyl, propylpiperidine bis trifluoromethanesulfonimide salt, 1,2-bis(cyanoethoxy)ethane, adiponitrile, 1,3,5-pentanetricarbonitrile, fumaronitrile, or 1,2,3-tris(2-cyanoethoxy)propane.

11. The lithium metal battery according to claim 10, wherein based on a total mass of the electrolyte, a mass percentage of the third component is 0.01% to 10%.

12. The lithium metal battery according to claim 1, wherein porosity of the positive electrode plate is E%, satisfying $5 \leq E \leq 35$; and $0.5 \leq E/D \leq 15$.

13. An electronic apparatus, comprising the lithium metal battery according to any one of claims 1 to 12.

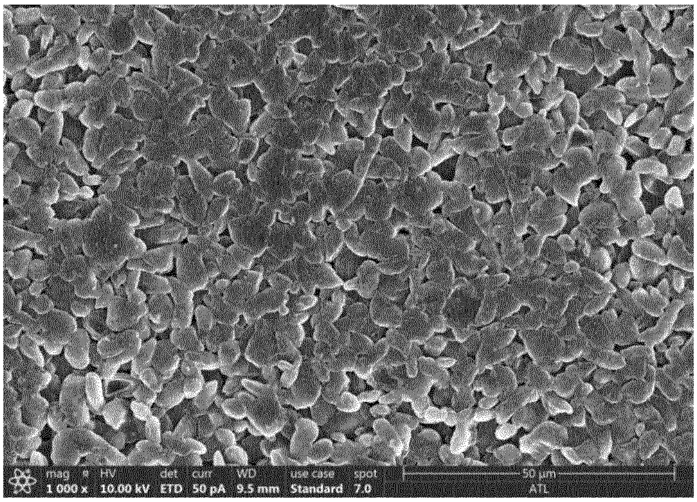
mag
1 000 x
HV
10.00 kV
det
ETD
curr
50 pA
WD
9.5 mm
use case
Standard
spot
7.0
50 µm
ATL

FIG. 1

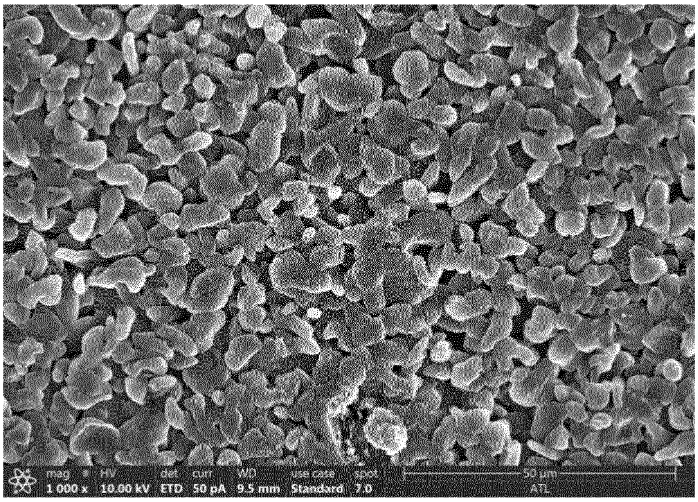
mag
1 000 x
HV
10.00 kV
det
ETD
curr
50 pA
WD
9.5 mm
use case
Standard
spot
7.0
50 µm
ATL

FIG. 2

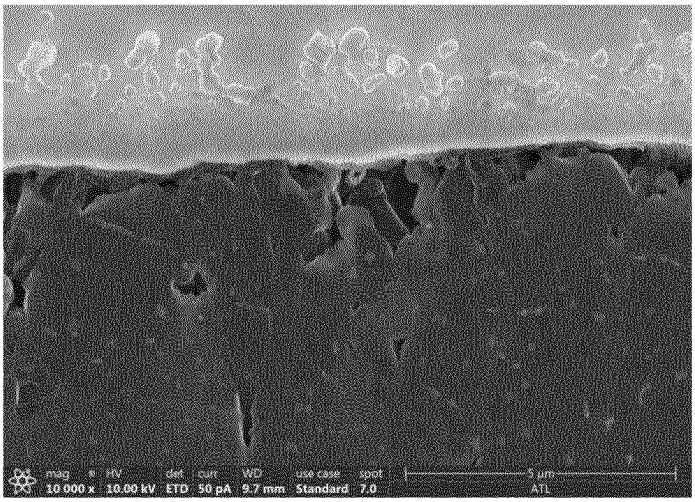
mag HV det curr WD use case spot
10 000 x 10.00 kV ETD 50 pA 9.7 mm Standard 7.0
5 µm
ATL

FIG. 3

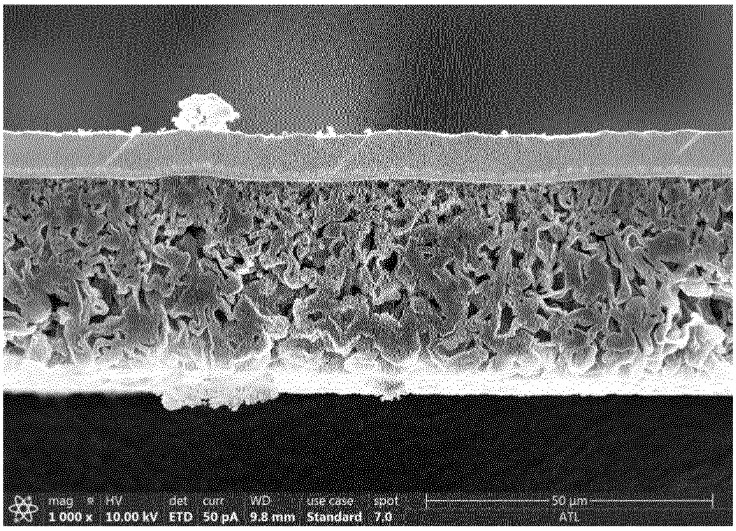
mag HV det curr WD use case spot
1 000 x 10.00 kV ETD 50 pA 9.8 mm Standard 7.0
50 µm
ATL

FIG. 4

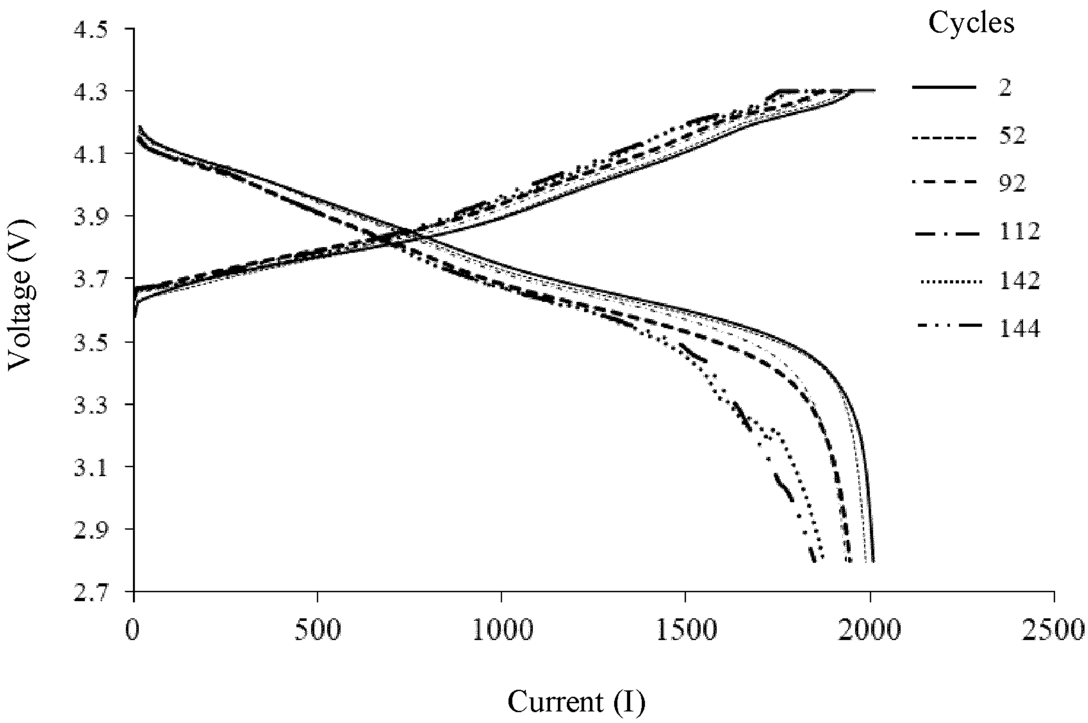
Cycles
2
52
92
112
142
144
4.5
4.3
4.1
3.9
3.7
3.5
3.3
3.1
2.9
2.7
Voltage (V)
0
500
1000
1500
2000
2500
Current (I)

FIG. 5

**INTERNATIONAL SEARCH REPORT**

International application No.
**PCT/CN2022/074525**

**A. CLASSIFICATION OF SUBJECT MATTER**

H01M 10/052(2010.01)i；H01M 10/0569(2010.01)i；H01M 10/0568(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 锂金属, 金属锂, 电解液, 电解质溶液, 溶剂, 锂盐, 浓度, 醚, 苯, 氟, 碳酸酯, 重量, 质量, 百分含量, 比, battery, cell, lithium, metal, electrolyte, solution, solvent, "lithium salt", ether, benzene, fluorine, carbonate, weight, percent, percentage, content, ratio

**C. DOCUMENTS CONSIDERED TO BE RELEVANT**

| Category* | Citation of document, with indication, where appropriate, of the relevant passages | Relevant to claim No. |
|---|---|---|
| X | CN 113437253 A (NINGDE CONTEMPORARY AMPEREX TECHNOLOGY CO., LTD.) 24 September 2021 (2021-09-24)<br>description, paragraphs 0060-0122 | 1, 2, 4-11, 13 |
| Y | CN 113437253 A (NINGDE CONTEMPORARY AMPEREX TECHNOLOGY CO., LTD.) 24 September 2021 (2021-09-24)<br>description, paragraphs 0060-0122 | 3, 12, 13 |
| X | CN 113745657 A (BYD CO., LTD.) 03 December 2021 (2021-12-03)<br>description, paragraphs 0013-0061 | 1, 2, 4-11, 13 |
| Y | CN 113745657 A (BYD CO., LTD.) 03 December 2021 (2021-12-03)<br>description, paragraphs 0013-0061 | 3, 12, 13 |
| Y | CN 1866604 A (SHOUTIANEN BUSINESS MANAGEMENT CO., LTD.) 22 November 2006 (2006-11-22)<br>description, page 6, line 1 to page 13, line 27 | 3, 12, 13 |
| X | CN 113948772 A (UNIVERSITY OF SCIENCE AND TECHNOLOGY OF CHINA) 18 January 2022 (2022-01-18)<br>description, paragraphs 0005-0027 | 1, 2, 4-11, 13 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 October 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/074525**

**C. DOCUMENTS CONSIDERED TO BE RELEVANT**

| Category* | Citation of document, with indication, where appropriate, of the relevant passages | Relevant to claim No. |
|---|---|---|
| Y | CN 113948772 A (UNIVERSITY OF SCIENCE AND TECHNOLOGY OF CHINA) 18 January 2022 (2022-01-18) description, paragraphs 0005-0027 | 3, 12, 13 |
| Y | CN 101807710 A (SAMSUNG SDI CO., LTD.) 18 August 2010 (2010-08-18) description, paragraph 0012 | 3, 12, 13 |
| A | CN 110061293 A (NINGDE AMPEREX TECHNOLOGY LTD.) 26 July 2019 (2019-07-26) entire document | 1-13 |
| A | US 2020194786 A1 (CUBERG INC.) 18 June 2020 (2020-06-18) entire document | 1-13 |

Form PCT/ISA/210 (second sheet) (January 2015)

**INTERNATIONAL SEARCH REPORT**
**Information on patent family members**

International application No.
**PCT/CN2022/074525**

| Patent document cited in search report | | | Publication date (day/month/year) | Patent family member(s) | | | Publication date (day/month/year) |
|---|---|---|---|---|---|---|---|
| CN | 113437253 | A | 24 September 2021 | None | | | |
| CN | 113745657 | A | 03 December 2021 | None | | | |
| CN | 1866604 | A | 22 November 2006 | None | | | |
| CN | 113948772 | A | 18 January 2022 | None | | | |
| CN | 101807710 | A | 18 August 2010 | KR | 20100093375 | A | 25 August 2010 |
| | | | | JP | 2010192438 | A | 02 September 2010 |
| | | | | US | 2010209765 | A1 | 19 August 2010 |
| | | | | EP | 2219247 | A1 | 18 August 2010 |
| CN | 110061293 | A | 26 July 2019 | WO | 2020233234 | A1 | 26 November 2020 |
| | | | | EP | 3973588 | A1 | 30 March 2022 |
| | | | | US | 2021408604 | A1 | 30 December 2021 |
| US | 2020194786 | A1 | 18 June 2020 | JP | 2022516205 | A | 24 February 2022 |
| | | | | WO | 2020124086 | A1 | 18 June 2020 |
| | | | | EP | 3895244 | A1 | 20 October 2021 |
| | | | | CN | 113196539 | A | 30 July 2021 |
| | | | | KR | 20210107720 | A | 01 September 2021 |

Form PCT/ISA/210 (patent family annex) (January 2015)